# EUROPÄISCHE PATENTSCHRIFT

(11) **EP 1 855 104 B1**
(45) Veröffentlichungstag und Bekanntmachung des Hinweises auf die Patenterteilung: **28.01.2009**
(21) Anmeldenummer: 06009520.5
(22) Anmeldetag: 09.05.2006
(51) Int. Cl.: G01N 22/00

(54) **Mikrowellenmessvorrichtung zur Bestimmung mindestes einer Messgrösse an einem Produkt**
Microwave measuring device for determining at least one measured value on a product
Procédé de mesure à micro ondes destiné à la détermination d'une grandeur de mesure sur un produit

(43) Veröffentlichungstag der Anmeldung: 14.11.2007
(73) Patentinhaber: AMS- Advanced Microwave Systems GmbH, 22525 Hamburg (DE)
(72) Erfinder: Knöchel, Reinhard, Prof. Dr.-Ing., 25336 Elmshorn (DE); Taute, Wolfgang, Dipl.-Ing., 24235 Laboe (DE); Döscher, Claas, Dr.-Ing., 20253 Hamburg (DE)
(74) Vertreter: Müller Verweyen

(56) Entgegenhaltungen:
- DE-A1- 19 854 550
- DE-U1-3202004 007 01
- JP-A- 63 210 757
- US-A- 3 460 031
- US-A- 5 194 815

## Beschreibung

Die Erfindung betrifft eine Mikrowellenmessvorrichtung nach dem Oberbegriff von Anspruch 1.

Eine bekannte Messvorrichtung dieser Art umfasst einen kreiszylindrischen Hohlraumresonator mit einem Mikrowellenfeld vom E₀₁₀-Feldtyp, wobei die Probe entlang der Zylinderachse durch den Resonator geführt wird (R. Knöchel, "Mikrowellenmessverfahren: Messprinzipien und Applikatorformen", in: K. Kupfer, "Materialfeuchtemessung", expert-Verlag 1997, S. 146).

Aus EP 0 889 321 A1 ist eine Messvorrichtung bekannt, bei der ein kreiszylindrischer Resonator mit einem dielektrischen Material gefüllt ist, wodurch bei gegebener Messfrequenz die Wellenlänge des elektrischen Feldes und damit die Baugröße reduziert werden kann.

Aus EP 0 292 571 A1 ist eine Messvorrichtung mit einem kreiszylindrischen Hohlraumresonator und einem rohrförmigen Vorsprung zur Konzentration des Feldes im Probenvolumen bekannt.

JP 63 210757 A offenbart eine Mikrowellenmessvorrichtung nach dem Oberbegriff von Anspruch 1.

Aufgabe der vorliegenden Erfindung ist es, mit einfachen Mitteln eine Mikrowellenmessvorrichtung mit nach Bedarf verringerter Baugröße oder reduzierter Messfrequenz bereitzustellen.

Die Erfindung löst diese Aufgabe mit den Merkmalen des Anspruchs 1. Labyrinthstruktur ist erfindungsgemäß jede durch eine Mehrzahl von Windungen, Faltungen, Umlenkungen oder Verzweigungen gebildete Formung des den Resonatorraum bildenden Volumens, die eine Verlängerung des von dem Mikrowellenfeld durchlaufenen Weges bewirkt.

Die Labyrinthstruktur des Resonatorhohlraums bewirkt eine Verlängerung des elektrischen Weges, d.h. des von dem Mikrowellenfeld in einer Ausbreitungsrichtung durchlaufenen Weges im Verhältnis zu einer mittleren geometrischen Ausdehnung des Resonators. Im Vergleich zu einem einfachen Hohlraumresonator kann daher mittels der erfindungsgemäßen Labyrinthstruktur die gleiche Wellenlänge des elektrischen Feldes auf einer geringeren geometrischen Länge untergebracht werden, wodurch die Abmessungen des Resonators und damit die Baugröße des Sensors reduziert werden können. Andererseits kann im Vergleich zu einem einfachen Hohlraumresonator bei gegebenen Platzverhältnissen eine größere Wellenlänge auf derselben geometrischen Länge untergebracht werden, wodurch eine Verringerung der Messfrequenz ermöglicht wird. Dies kann im Hinblick auf eine erhöhte Eindringtiefe des Mikrowellenfeldes in das Produkt und eine Homogenisierung des von dem Mikrowellenfeldes erfassten Produktbereichs bei einigen Anwendungen besonders vorteilhaft sein. Die Erfindung kommt daher besonders bevorzugt bei Messfrequenzen unterhalb von 2 GHz zum Einsatz.

Um die Erfindung von koaxialen Strukturen beispielsweise gemäß EP 0 292 571 A1 sowie gegenüber flachen kreiszylindrischen Hohlraumresonatoren abzugrenzen, ist erfindungsgemäß eine Labyrinthstruktur nur eine solche, die eine signifikante Verlängerung des von dem Mikrowellenfeld durchlaufenen Weges um mindestens einen Faktor 2.0 erreicht. Beispielsweise erreicht die koaxiale Struktur gemäß EP 0 292 571 A1 eine Verlängerung des von dem Mikrowellenfeld durchlaufenen Weges um lediglich einen Faktor 1.8 im Verhältnis zu der mittleren Resonatorausdehnung.

Während bei dem bekannten Resonator gemäß EP 0 889 321 A1 zur Reduzierung der Abmessungen eine Verkürzung der Wellenlänge mittels dielektrischer Füllung des Resonators erreicht wird, lässt die Erfindung, falls eine Reduzierung der Abmessungen im Vordergrund steht, die Wellenlänge vorteilhafterweise im wesentlichen unverändert, verlängert jedoch durch die Labyrinthstruktur den von der Mikrowelle durchlaufenen Weg, was ein vollkommen andersartiges Prinzip darstellt.

Die Ausbreitungsrichtung kann insbesondere eine radiale Ausbreitungsrichtung sein. Der von dem elektrischen Mikrowellenfeld durchlaufene Weg ist dann in einem Längsquerschnitt des Resonators diejenige Linie, die von dem Mittelpunkt der Produktraumgrenze zunächst radial nach außen und dann jederzeit senkrecht zu den elektrischen Feldlinien verläuft. Produktraumgrenze meint dabei die Fläche, die den mit dem Mikrowellenfeld wechselwirkenden Abschnitt des Produktraums begrenzt (Wechselwirkungszonengrenze). Entlang des von dem Mikrowellenfeld durchlaufenen Weges nimmt die Phase des elektrischen Feldes kontinuierlich zu. Bei einer Verzweigung des Weges ist der von dem Mikrowellenfeld durchlaufene Weg die Summe der in sämtlichen Zweigen durchlaufenen Wege. Im allgemeinen ist der von dem Mikrowellenfeld durchlaufene Weg die Summe der in sämtlichen Resonatorabschnitten durchlaufenen Wege. Die Länge L=c/(2.612·f·√ε) ist ein einfach zu bestimmendes Maß für diesen von dem Mikrowellenfeld durchlaufenen Weg, wozu lediglich die Frequenz f der zur Messung verwendeten Resonanz des Mikrowellenfeldes bekannt sein muss. ε ist die mittlere Dielektrizitätszahl der Füllung Resonatorraums; im Falle von Luft ist ε = 1. Die Skalierung 2.612 ist so gewählt, dass für einen zylindrischen E₀₁₀-Resonator die Länge L gleich dem Radius des Zylinders wird.

Im allgemeinen reicht es aus, wenn die erfindungsgemäße Labyrinthstruktur in bezug auf eine Ausbreitungsrichtung vorliegt. Bei einem Rechteckresonator muss daher nicht in Bezug auf beide Hauptrichtungen eine Labyrinthstruktur vorliegen. Die Erfindung ist auch nicht auf eine Labyrinthstruktur in einer radialen Ausbreitungsrichtung beschränkt; die Labyrinthstruktur kann beispielsweise auch in Umfangsrichtung vorliegen, insbesondere bei Verwendung höhermodiger Resonanzen.

Hohlraumresonator bedeutet, dass es sich um einen Resonator handelt, der abgesehen von den Öffnungen zur Probenführung geschlossen ist (geschirmter Resonator). Die Öffnungen zur Probenein- bzw. -durchführung in bzw. durch den Resonator stören den Feldverlauf in der Regel nur geringfügig, so dass sich die Moden des Resonators als Moden eines entsprechenden geschlossenen Hohlraumresonators bezeichnen und beschreiben lassen.

Die Erfindung betrifft einen Resonator, bei dem das Produkt zur Messung in den Resonatorraum eingeführt wird. Der Gegenstand der Anmeldung ist dadurch abgegrenzt gegenüber Streufeld-Resonatoren, bei denen das Produkt außerhalb des Resonatorraums angeordnet ist und die Messung mittels eines externen elektrischen Streufeldes erfolgt.

Vorzugsweise ist die Messvorrichtung zur Durchführung der Probe durch die Messvorrichtung eingerichtet, um die Messung an einem kontinuierlichen Produktstrom zu ermöglichen. Die Einführöffnung ist dann eine Durchgangsöffnung durch die Messvorrichtung. Hier kommen aufgrund der häufig engen Platzverhältnisse die Vorzüge der Erfindung besonders zum Tragen. Die Erfindung ist aber nicht hierauf beschränkt. Auch Portionsmessvorrichtungen mit einer einseitig geöffneten Einführöffnung zum Ein- und Ausführen einer Produktportion beispielsweise in einem Probenbehälter sind umfasst.

Vorzugsweise wird der Resonator zur Messung in einem Mode niedriger Ordnung, weiter vorzugsweise in dem Grundmode betrieben. Die elektrische Feldenergie ist vorzugsweise im Zentrum des Hohlraumresonators, d.h. im Bereich der Produktzuführung maximal, fällt in der Ausbreitungsrichtung mit zunehmender Entfernung vom Zentrum ab und wird am Ort der entfernten Resonatorbegrenzung minimal bzw. null. Vorzugsweise kann sich daher entlang der radialen Ausbreitungsrichtung über den gesamten Resonatordurchmesser ungefähr eine halbe Wellenlänge des Mikrowellenfeldes ausbreiten. Ebenfalls bevorzugt ist die Verwendung eines weitgehend radialsymmetrischen Feldes, um den Einfluss von Produktinhomogenitäten zu unterdrücken. Schließlich ist das Feld in Axialrichtung in der Wechselwirkungszone vorzugsweise im wesentlichen konstant, d.h. es liegt keine Feldabhängigkeit in Axialrichtung vor. Die Erfindung ist nicht auf die genannten Moden beschränkt, sondern umfasst auch den Betrieb in höheren Moden, bei denen die Feldenergie sich über ein größeres Volumen verteilt, damit das Probendielektrikum schwächer angekoppelt ist. Bevorzugte Beispiele sind "gefaltete" Hₙ₁₁-Resonanzen (n≥1) oder Eₙ₁₀-Resonanzen (n≥1) eines runden Resonators.

Die Erfindung betrifft die Bestimmung mindestens einer Messgröße an einem Produkt. Dies betrifft einerseits die Bestimmung einer dielektrischen Eigenschaft des Systems Produkt plus Wasser und davon abgeleiteten Größen, insbesondere der Feuchte und/oder der Dichte des Produkts. Andererseits kann auch das Vorhandensein einer erwünscht oder unerwünscht vorhandenen Fremdsubstanz nachgewiesen werden. Fremdsubstanz ist jede weitere Substanz in dem System Produkt plus Wasser. Als Beispiel sei die Messung des Kohleanteils in Filtertow genannt, die sowohl als kontinuierliche Messung an einem Filtertowstrom als auch als Einzelmessung an einer Filtertowportion möglich ist.

Bevorzugte Anwendungen betreffen die Messung an strangförmigen oder in einem Strang geführten Produkten, insbesondere Faserstrangprodukten wie Tabakprodukte, insbesondere Tabakstrang, Zigaretten oder Filtertow, sowie Textilfaserprodukten, insbesondere Baumwollstrang, Fäden oder Garne, oder in einem Strang geführte Wirkstoffeinheiten, beispielsweise Tabletten. Der Resonator und die Produktöffnungen im Resonator sind daher vorzugsweise an diese Anwendungen angepasst. Umfasst ist auch die Messung an Schüttgütern, beispielsweise Getreide, oder an Holzspänen. Die Erfindung umfasst aber auch Resonatoren mit schlitzförmigen Produktöffnungen insbesondere zur Messung an flachen oder bahnförmigen Produkten.

Weitere vorteilhafte Merkmale der Erfindung werden im folgenden anhand bevorzugter Ausführungsformen unter Bezugnahme auf die beigefügten Zeichnungen erläutert. Dabei zeigt:
- Fig. 1:: einen Längsquerschnitt durch einen Sensor mit einem Rundresonator;
- Fig. 2:: eine perspektivische Ansicht auf einen Sensor mit einem Rundresonator;
- Fig. 3 bis 8:: Längsquerschnitte durch weitere Sensoren mit einem Rundresonator;
- Fig. 9:: eine schematische Darstellung einer Messanordnung mit einem Sensor; und
- Fig. 10:: eine Draufsicht auf einen Rechteckresonator.

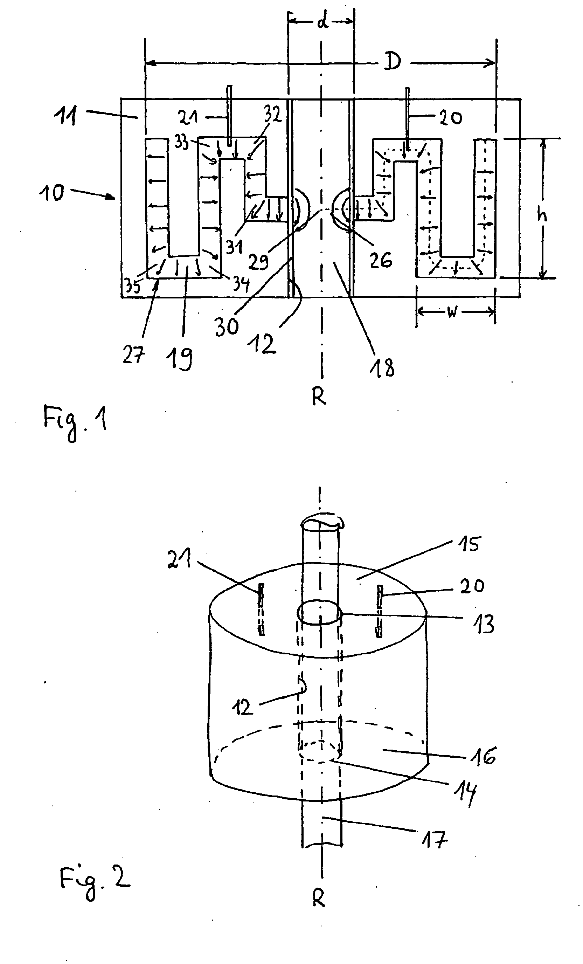

In dem Sensor 10 gemäß Fig. 1 ist in dem Sensorkörper 11 eine Durchgangsbohrung 12 mit Durchmesser d zwischen einer ersten Öffnung 13 in einer ersten Stirnfläche 15 und einer zweiten öffnung 14 in einer zweiten Stirnfläche 16 des Sensors 10 vorgesehen. Die Durchgangsöffnung 12 dient zur Durchführung eines Produkts 17 durch den Sensor 10, wie aus Fig. 2 ersichtlich ist. Die Durchgangsöffnung 12 definiert daher einen Produktraum 18, d.h. einen von Produkt eingenommenen Raum, in dem Sensor 10. Die Mittelachse der Durchgangsöffnung 12 definiert weiterhin eine Längsachse R. Der Sensorkörper 11 ist aus fertigungstechnischen Gründen zweckmäßigerweise mehrteilig aufgebaut.

In dem Sensorkörper 11 des Sensors 10 ist ein Hohlraum 19 geformt, der zusammen mit dem felderfüllten Teil des Produktraums, d.h. der Wechselwirkungszone 26, den Mikrowellenresonator 27 bildet. Im Beispiel der Figuren 1 und 3 bis 8 handelt es sich um einen rotationssymmetrischen Resonator, wobei die Symmetrieachse die Resonatorachse definiert. In vielen Fällen erfolgt die Produktzuführung entlang der Mittelachse des Resonators, so dass die Längsachse R und die Resonatorachse zusammenfallen. Um zu verhindern, dass verunreinigungen oder Produktreste in den Resonatorhohlraum 19 gelangen, kann ein Rohr 30 aus einem verlustarmen, temperaturunempfindlichen dielektrischen Material in die Durchgangsbohrung 12 eingesetzt sein. In diesem Fall ist der Durchmesser des Produktraums um die zweifache Wandstärke des Rohrs 30 geringer als der Durchmesser d der Durchgangsöffnung 12.

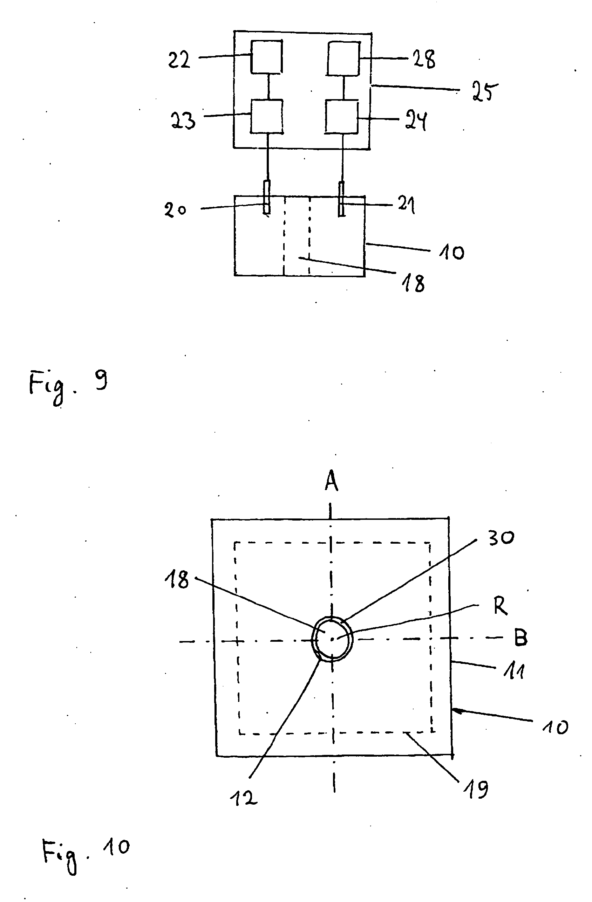

Die Messanordnung mit Sensor 10 ist in Fig. 9 gezeigt. Mikrowellen werden mittels eines von einer Steuereinrichtung 22 gesteuerten Generators 23 erzeugt und mittels einer Leitung zu der Koppeleinrichtung 20 geleitet, durch die das Mikrowellenfeld in den Hohlraum 19 eingekoppelt wird. Die von dem Generator 23 erzeugte Frequenz des Mikrowellenfeldes ist so abgestimmt, dass sich in dem Resonator 27 ein stehendes resonantes Mikrowellenfeld ausbildet. In der Regel ist die zur Messung verwendete Resonanz festgelegt. Das Mikrowellenfeld wechselwirkt mit dem Produkt 17 in der Wechselwirkungszone 26.

über die Koppeleinrichtung 21 wird ein durch die Wechselwirkung modifiziertes Mikrowellensignal aus dem Hohlraum 19 ausgekoppelt und mittels einer Leitung einem Analysator 24 zugeführt, dessen Ausgangssignal von einer entsprechend programmierten Auswerteeinrichtung 28 verarbeitet wird. Generator 23, Analysator 24 und Steuereinrichtung 22 und Auswerteeinrichtung 28 können in einer Steuereinheit 25 zusammengefasst sein. Das ausgekoppelte Signal ist durch die Wechselwirkung mit dem Produkt 17 in der wechselwirkungs zone 26 charakteristisch modifiziert, beispielsweise in Form einer Verschiebung der Resonanzfrequenz und einer Änderung der Breite der Resonanzkurve. Auch die Präsenz von Fremdkörpern, d.h. einer festen Fremdsubstanz, in dem Produkt lässt sich aus dem ausgekoppelten Signal ableiten.

Nach einem bevorzugten Messverfahren wird die Messfrequenz im Bereich der Messresonanz verfahren, um zwei unabhängige Messparameter, beispielsweise die Breite der Messresonanz und die Resonanzfrequenz ermitteln zu können. Zu diesem Zweck ist die Steuereinrichtung 22 vorzugsweise entsprechend programmiert. Steuereinrichtung 22 und Auswerteeinrichtung 28 können in einem Computer gebildet sein. Die Bestimmung zweier unabhängiger Parameter gestattet beispielsweise die Ermittlung der Produktfeuchte unabhängig von der Produktdichte und umgekehrt.

Der von dem Mikrowellenfeld radial durchlaufene Weg wird in einem Längsschnitt durch den Resonator betrachtet, so dass die Längsachse in der Schnittebene liegt, wie in den Fig. 1 und 3 bis 8. Der elektrische Weg ist in den Fig. 1 und 3 bis 8 gestrichelt eingezeichnet. Ausgehend von dem Mittelpunkt 29 der Wechselwirkungszone 26 verläuft der Weg, der jederzeit senkrecht zu den elektrischen Feldlinien verläuft, zunächst radial nach außen. Die erfindungsgemäße Labyrinthstruktur wird im Beispiel der Fig. 1 von einer Mehrzahl, hier fünf Faltungen 31 bis 35 gebildet, die jeweils eine Umlenkung des Mikrowellenfeldes entlang der radialen Ausbreitungsrichtung um 90° bewirken. Im allgemeinen kann die durch eine Faltung bewirkte Umlenkung auch größer als 90° sein, beispielsweise im Falle einer U-förmigen Faltung, oder im Bereich von 45° bis 90° liegen. Weiterhin muss es sich nicht um scharfe Faltungen handeln, umfasst sind auch bogen- oder wellenförmige Windungen oder abgerundete Faltungen. Umfasst sind beispielsweise auch S-förmige Strukturen oder Mäanderstrukturen. Die gestrichelten Wege in den Fig. 1 und 3 bis 8 verdeutlichen, dass die radiale Ausbreitungsrichtung auch nicht-radiale, insbesondere längsaxiale Abschnitte aufweist.

Die mittlere Resonatorausdehnung (h+w)/2 ergibt sich mittels der größten lichten Weite h parallel zur Längsachse R und der größten lichten Weite w senkrecht zur Längsachse R. "Licht" bedeutet dabei für Mikrowellen durchlässig. Die größte lichte Weite w senkrecht zur Längsachse R liegt außerhalb des Produktraums, d.h. sie wird bei einem mit undurchlässigem Material gefüllten Produktraum bestimmt. Aus Fig. 1 ist ersichtlich, dass der von dem elektrischen Feld durchlaufene Weg signifikant länger ist als der Mittelwert zwischen w und h.

Eine bevorzugte Ausführungsform gemäß Fig. 1 wurde mit folgenden Werten realisiert: Resonatordurchmesser D = 112 mm, d = 12 mm, h = 36 mm, w = 24 mm. Der in Fig. 1 eingezeichnete, von der Mikrowelle durchlaufene Weg beträgt 130 mm. Der Resonator wird mit f = 900 MHz betrieben. Die Länge L = c/(2.612·f) ergibt 128 mm, was in bester Übereinstimmung mit dem in Fig. 1 eingezeichneten, von der Mikrowelle durchlaufenen Weg ist. Das Verhältnis von L zu (h+w)/2 ergibt 4.3. Der Grund für die Übereinstimmung zwischen L und dem von der Mikrowelle durchlaufenen Weg besteht darin, dass die Messresonanz als eine gefaltete E-₀₁₀-Resonanz betrachtet werden kann. Mit dieser Ausführungsform kann die Messfrequenz bei gegebener Baugröße (D = 112 mm) auf 900 MHz gesenkt werden. Bei einem zylindrischen Hohlraumresonator im E₀₁₀-Modus würde die Messfrequenz bei diesem Durchmesser etwa 2.1 GHz betragen.

Zum Vergleich sei ein kreiszylindrischer Hohlraumresonator ohne Durchgangsbohrung (d=0) betrachtet, in dem die E₀₁₀-Resonanz angeregt ist. Falls die Höhe h gleich dem Resonatorradius ist, ist der von dem elektrischen Feld durchlaufene Weg gleich der mittleren Resonatorausdehnung (h+w)/2 und das zuvor betrachtete Verhältnis wird 1. Für flachere Resonatoren wird das Verhältnis größer als 1, bleibt aber in jedem Fall unter 2.

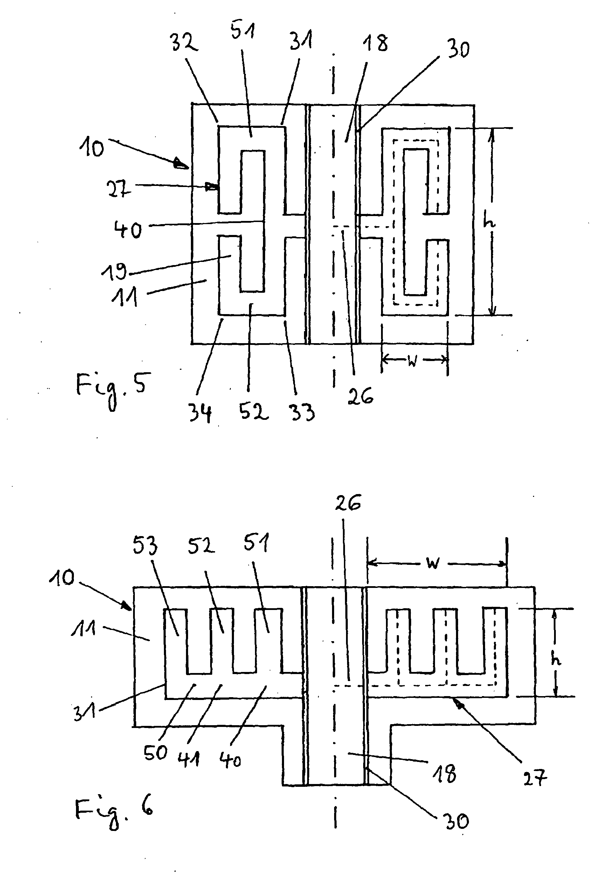

Für den Resonator aus Fig. 5 der EP 0 292 571 A1 ergeben sich folgende Werte: h = 25 mm, w = 19.4 mm; f = 2.9 GHz, daraus L = 39.6 mm; Verhältnis L zu (h+w)/2 = 1.8. Die einfache L-Faltung des Resonators ist also nicht ausreichend, um eine signifikante Steigerung der Weglänge (mindestens Faktor 2 des oben betrachteten Verhältnisses) zu erreichen.

Vergleichsweise sei ebenfalls ein Resonator für Zigarettenmaschinen aus der EP 0 889 321 A1 betrachtet. Der Resonator mit Radius r = 17.5 mm, h = 3 mm und w = 16 mm ist mit dielektrischem Material mit ε = 9.2 gefüllt und wird mit einer Frequenz von f = 2.589 GHz betrieben. Berücksichtigt man, dass der Produktraum frei von dielektrischem Material ist, ergibt sich ε_{eff} = 6.6 für die Füllung des Resonators. Die Länge L = c/(2.612·f·√ε) ergibt sich damit zu L = 17.3 mm in bester übereinstimmung mit dem Resonatorradius. Die Verringerung der Baugröße wird hier also nicht durch eine Erhöhung des von der Mikrowelle durchlaufenen Weges, sondern mittels der dielektrischen Resonatorfüllung erreicht. Das Verhältnis L zu (h+w)/2 beträgt 1.8 wegen der Flachheit des Resonators.

Ein erfindungsgemäßer Resonator für Zigarettenmaschinen wurde in der bevorzugten Ausführungsform gemäß Fig. 1 mit folgenden Werten realisiert: Resonatordurchmesser D = 43 mm, d = 9.5 mm, h = 12 mm, w = 9 mm. Der Resonator wird mit f = 2.6 GHz betrieben. Die Länge L = c/(2.612·f) ergibt 44 mm. Das Verhältnis von L zu (h+w)/2 beträgt daher 4.2. Mit dieser Ausführungsform kann bei gegebener Messfrequenz von 2.6 GHz die Baugröße auf D = 43 mm gesenkt werden. Bei einem zylindrischen Hohlraumresonator im E₀₁₀-Modus würde der Durchmesser bei dieser Resonanzfrequenz etwa 151 mm betragen.

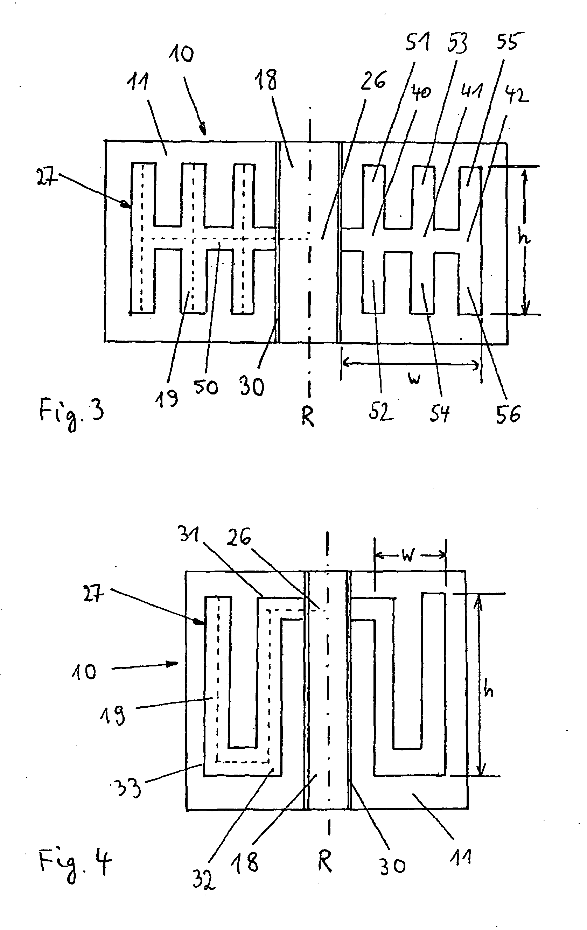

Das Ausführungsbeispiel gemäß Fig. 3 zeigt einen Sensor 10 mit einer andersartigen Labyrinthstruktur, die Verzweigungen 40, 41, 42 und entsprechende Verzweigungs- oder Stichwege 51 bis 56 aufweist, die entsprechende Induktivitäten bilden. Der von der Mikrowelle durchlaufene Weg umfasst den Hauptweg 50 und sämtliche Verzweigungswege 51 bis 56. Bei maßstabsgetreuer Ausführung würde sich ein Verhältnis von durchlaufenem Weg zu (h+w)/2 von 4.3 ergeben.

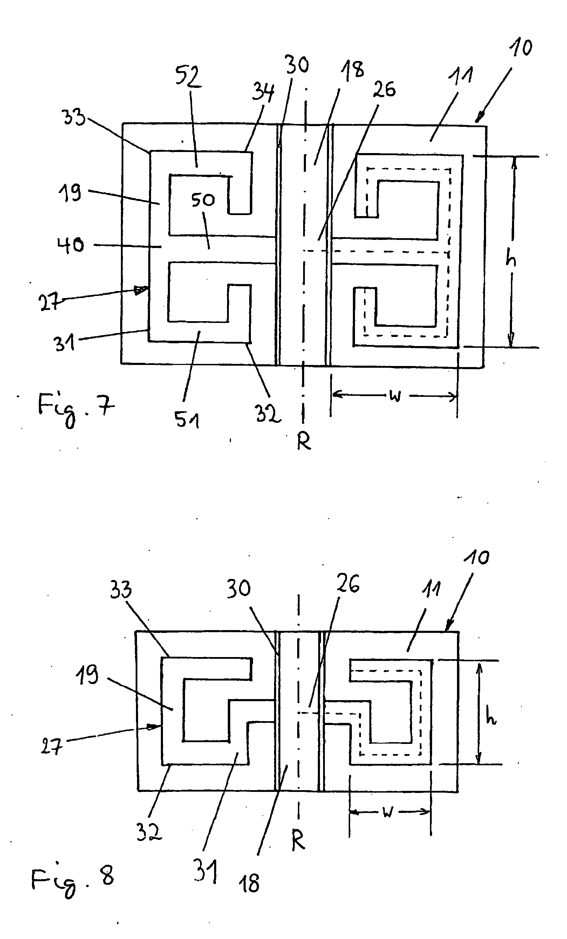

Die Ausführungsbeispiele gemäß den Fig. 4 bis 8 verdeutlichen, dass die Labyrinthstruktur durch unterschiedlichste Formungen des Resonatorhohlraums, insbesondere unterschiedlichste Kombinationen von Windungen 30, 31, 32, ... und/oder Verzweigungen 40, 41, 42, ... und unterschiedlichste Anordnungen derselben gebildet sein kann. Bei maßstabsgetreuer Ausführung würden sich folgende Verhältnisse von durchlaufenem Weg zu mittlerer Abmessung (h+w)/2 ergeben: Fig. 4: 3.4; Fig. 5: 3.7; Fig. 6: 3.5; Fig. 7: 3.6; Fig. 8: 3.5.

Die Erfindung ist nicht auf Wege mit gleichbleibender Höhe bzw. Breite beschränkt. Umfasst sind vielmehr beliebig geformte Hohlräume, sofern sie eine Labyrinthstruktur mit der erfindungsgemäßen Verlängerung des elektrischen Weges im Verhältnis zur mittleren Resonatorausdehnung bilden. Eine mögliche Ausbildung einer Labyrinthstruktur ist eine sogenannte Waffeleisenstruktur.

Die Resonatoren in den Ausführungsformen gemäß Fig. 1 bis 8 sind im wesentlichen rotationssymmetrisch, abgesehen insbesondere von den Elementen zum Ein-/Auskoppeln des Mikrowellenfeldes. Die Erfindung umfasst aber auch Rechteckresonatoren bzw. Resonatoren, die bezüglich Rotation um 360°/n symmetrisch sind, wobei n eine ganze Zahl größer 1 ist.

Fig. 10 zeigt eine Ansicht auf einen Rechteckresonator entlang der Längsachse R, d.h. die Papierebene ist senkrecht zur Längsachse R orientiert. Die äußere Kontur des Resonatorhohlraums 19 ist gestrichelt wiedergegeben. Der Resonator 19 weist in diesem Fall in beiden Hauptrichtungen A und B eine Labyrinthstruktur auf. In einem Schnitt, der die Achsen A und R enthält, und ebenso in einem Schnitt, der die Achsen B und R enthält, könnte der Resonator aus Fig. 10 wie in Fig. 1 gezeigt aussehen. Die Messresonanz könnte beispielsweise eine "gefaltete H₁₀₁-Resonanz" sein.

In einer weiteren Ausführungsform könnte ausgehend von Fig. 10 der Resonator 19 nur in einer der beiden Hauptrichtungen A und B eine Labyrinthstruktur aufweisen. In diesem Fall könnte der Resonator aus Fig. 10 entweder in einem Schnitt, der die Achsen A und R enthält, oder in einem Schnitt, der die Achsen B und R enthält, wie in Fig. 1 gezeigt aussehen.

Die Resonatoren in den Ausführungsformen gemäß Fig. 1 bis 8 und 10 sind im wesentlichen frei von dielektrischem Material, d.h. der Resonatorhohlraum ist luftgefüllt. Dies ist vorteilhaft, da ein zusätzliches dielektrisches Material eine zusätzliche Temperaturabhängigkeit mit sich bringt, die sich negativ auf das Messergebnis auswirken kann. Jedoch ist die Verwendung einer homogenen dielektrischen Füllung für den Resonatorhohlraum (abgesehen von dem Produktraum) nicht ausgeschlossen, beispielsweise um eine noch weitergehende Reduzierung der Abmessungen zu erreichen.

## Patentansprüche

1. Mikrowellenmessvorrichtung zur Bestimmung mindestens einer Messgröße an einem Produkt (17), mit einem Hohlraumresonator (19), in dem sich ein stehendes elektrisches Mikrowellenfeld ausbildet, einer Einführöffnung (12) zum Einführen des Produkts in den Hohlraumresonator (19) entlang einer Längsachse (R), und einer Wechselwirkungszone (26) in der Einführöffnung (12), wobei ein in der Wechselwirkungszone (26) befindliches Produkt mit dem Mikrowellenfeld wechselwirkt, wobei der Hohlraumresonator (19) eine Labyrinthstruktur aufweist, die eine Verlängerung der elektrischen Länge L=c/(2.612·f·√ε) um mindestens einen Faktor 2.0 relativ zu einer mittleren Resonatorausdehnung (h+w)/2 bewirkt, wobei f die Messresonanzfrequenz des Mikrowellenfeldes, ε die mittlere Dielektrizitätszahl des Resonatorraums, h ein maximaler lichter Abstand in dem Hohlraumresonator (19) parallel zu der Längsachse (R) und w ein maximaler lichter Abstand in dem Hohlraumresonator (19) senkrecht zu der Längsachse (R) ist, **dadurch gekennzeichnet, dass** die Labyrinthstruktur eine Mehrzahl von gewundenen oder gefalteten Resonatorabschnitten (31, 32, 33, ...) und/oder eine Mehrzahl von Verzweigungen (40, 41, 42,...) umfasst.

2. Mikrowellenmessvorrichtung nach Anspruch 1, **dadurch gekennzeichnet, dass** die elektrische Länge L mindestens einen Faktor 2.5, vorzugsweise mindestens einen Faktor 3.0, weiter vorzugsweise mindestens einen Faktor 3.3, weiter vorzugsweise mindestens einen Faktor 3.8 größer ist als die mittlere Resonatorausdehnung (h+w)/2.

3. Mikrowellenmessvorrichtung nach Anspruch 1 oder 2, **dadurch gekennzeichnet, dass** die Labyrinthstruktur mindestens drei, weiter vorzugsweise mindestens vier gewundenen oder gefalteten Resonator-abschnitten (31, 32, 33, ...) umfasst.

4. Mikrowellenmessvorrichtung nach Anspruch 3, **dadurch gekennzeichnet, dass** die Labyrinthstruktur mindestens einen sich verzweigenden Resonatorabschnitt (40, 41, 42, ...) umfasst.

5. Mikrowellenmessvorrichtung nach einem der vorangehenden Ansprüche, **dadurch gekennzeichnet, dass** der Hohlraumresonator (19) im wesentlichen frei von dielektrischem Material ist.

6. Mikrowellenmessvorrichtung nach einem der vorangehenden Ansprüche, **dadurch gekennzeichnet, dass** die Mikrowellenmessvorrichtung zur Messung an einem strang-, stab- oder tablettenförmigen Produkt eingerichtet ist.

7. Messanordnung mit einer Mikrowellenmessvorrichtung (10) nach einem der vorangehenden Ansprüche, einer mit der Mikrowellenmessvorrichtung (10) verbundenen Steuereinheit (22, 23) zur Erzeugung des zur Messung verwendeten Mikrowellenfeldes und einer mit der Mikrowellenmessvorrichtung (10) verbundenen Auswerteeinheit (24, 28) zum Bestimmen der Messgröße durch Auswerten eines von der Mikrowellenmessvorrichtung (10) erzeugten Messsignals.

8. Messanordnung nach Anspruch 7, **dadurch gekennzeichnet, dass** die Frequenz des zur Messung verwendeten Mikrowellenfeldes 2.0 GHz oder weniger, vorzugsweise 1.5 GHz oder weniger, weiter vorzugsweise 1.0 GHz oder weniger beträgt.

9. Messanordnung nach Anspruch 7 oder 8, **dadurch gekennzeichnet, dass** die Auswerteeinheit (24, 28) zur Bestimmung zweier unabhängiger, eine Resonanzkurve des Meßsignals charakterisierender Parameter eingerichtet ist.

10. Messanordnung nach einem der Ansprüche 7 bis 9, **dadurch gekennzeichnet, dass** die Auswerteeinheit (24, 28) zur Bestimmung der Frequenz und der Breite der Resonanzkurve eingerichtet ist.

11. Messanordnung nach einem der Ansprüche 7 bis 10, **dadurch gekennzeichnet, dass** die Auswerteeinheit (24, 28) zur Bestimmung der Feuchte, Dichte, Masse und/oder einer dielektrischen Eigenschaft des Produkts (17) eingerichtet ist.

12. Messanordnung nach einem der Ansprüche 7 bis 11, **dadurch gekennzeichnet, dass** die Auswerteeinheit (24, 28) zur Detektion einer Fremdsubstanz in dem Produkt (17) eingerichtet ist.

13. Verwendung einer Mikrowellenmessvorrichtung nach einem der Ansprüche 1 bis 6 zur Bestimmung mindestens einer Messgröße an einem Faserprodukt, insbesondere einem Tabak- oder Textilfaserprodukt.

## Claims

1. Microwave measuring device for determining at least one measured value on a product (17), comprising a cavity resonator (19) in which a standing electrical microwave field is formed, an insert opening (12) for inserting the product into the cavity resonator (19) along a longitudinal axis (R), and an interaction zone (26) in the insert opening (12), wherein a product located in the interaction zone (26) interacts with the microwave field, wherein the cavity resonator (19) has a meander structure effecting an elongation of the electrical length L=c/(2.612·f·√ε) by at least a factor 2.0 relative to an average resonator extent (h+w)/2, wherein f is the measuring resonance frequency of the microwave field, ε is the average permittivity of the resonator cavity, h is a maximum free distance in the cavity resonator (19) parallel to the longitudinal axis (R), and w is a maximum free distance in the cavity resonator (19) perpendicular to the longitudinal axis (R), **characterized in that** the meander structure includes a plurality of wound or bent resonator sections (31, 32, 33, ...) and/or a plurality of branchings (40, 41, 42, ...).

2. Microwave measuring device according to claim 1, **characterized in that** the electrical length L exceeds the average resonator extent (h+w)/2 by at least a factor 2.5, preferably by at least a factor 3.0, further preferably by at least a factor 3.3, further preferably by at least a factor 3.8.

3. Microwave measuring device according to claim 1 or 2, **characterized in that** the meander structure includes at least three, further preferably at least four wound or bent resonator sections (31, 32, 33, ...).

4. Microwave measuring device according to claim 3, **characterized in that** the meander structure includes at least one branching resonator section (40, 41, 42, ...).

5. Microwave measuring device according to one of the preceding claims, **characterized in that** the cavity resonator (19) is basically free of dielectric material.

6. Microwave measuring device according to one of the preceding claims, **characterized in that** the microwave measuring device is prepared to measure on a string-like, on a rod-shaped or on a tablet-shaped product.

7. Measuring set-up comprising a microwave measuring device (10) according to one of the preceding claims, a control unit (22, 23) connected to the microwave measuring device (10) for generating the microwave field utilized for the measuring, and an evaluation unit (24, 28) connected to the microwave measuring device (10) for determining the measured value by evaluating a measuring signal generated by the microwave measuring device (10).

8. Measuring set-up according to claim 7, **characterized in that** the frequency of the microwave field utilized for the measuring is 2.0 GHz or less, preferably 1.5 GHz or less, further preferably 1.0 GHz or less.

9. Measuring set-up according to claim 7 or 8, **characterized in that** the evaluation unit (24, 28) is prepared to determine two independent parameters characterizing a resonance curve of the measuring signal.

10. Measuring set-up according to one of the claims 7 to 9, **characterized in that** the evaluation unit (24, 28) is prepared to determine the frequency and the amplitude of the resonance curve.

11. Measuring set-up according to one of the claims 7 to 10, **characterized in that** the evaluation unit (24, 28) is prepared to determine the moisture, the density, the mass and/or a dielectric characteristic of the product (17).

12. Measuring set-up according to one of the claims 7 to 11, **characterized in that** the evaluation unit (24, 28) is prepared to detect a foreign substance in the product (17).

13. Utilization of a microwave measuring device according to one of the claims 1 to 6 for determining at least one measured value on a fibre product, in particular a tobacco fibre product or a textile fibre product.

## Revendications

1. Dispositif de mesure de micro-ondes destiné à déterminer au moins une valeur de mesure d'un produit (17), avec un résonateur à cavité (19), dans lequel se forme un champ fixe électrique de micro-ondes, un orifice d'introduction (12) prévu pour introduire le produit dans le résonateur à cavité (19) le long d'un axe longitudinal (R), et d'une zone d'interaction (26) dans l'orifice d'introduction (12), un produit se trouvant dans la zone d'interaction (26) étant en interaction avec le champ de micro-ondes, le résonateur à cavité (19) présentant une structure labyrinthique, qui provoque un allongement de la longueur électrique L=c / (2.612·f·√ε) d'au moins un facteur de 2.0 par rapport à une étendue moyenne du résonateur (h+w)/2, f étant la fréquence de résonance mesurée du champ de micro-ondes, ε étant la constante diélectrique moyenne de la cavité résonante, h étant un écartement maximal dans le résonateur à cavité (19) parallèle à l'axe longitudinal (R) et w étant un écartement maximal dans le résonateur à cavité (19) perpendiculairement à l'axe longitudinal (R),
**caractérisé par le fait que** la structure labyrinthique comprend une multitude de zones de résonance (31, 32, 33, ...) enroulées ou pliées et/ou une multitude de ramifications (40, 41, 42, ...).

2. Dispositif de mesure de micro-ondes selon la revendication 1,
**caractérisé par le fait que** la longueur électrique L est supérieure d'au moins un facteur de 2.5, préférentiellement d'au moins un facteur de 3.0, plus préférentiellement d'au moins un facteur de 3.3, encore plus préférentiellement d'au moins un facteur de 3.8 à l'étendue moyenne du résonateur (h+w) /2.

3. Dispositif de mesure de micro-ondes selon la revendication 1 ou 2,
**caractérisé par le fait que** la structure labyrinthique comprend au moins trois, plus préférentiellement au moins quatre, zones de résonance (31, 32, 33, ...) enroulées ou pliées.

4. Dispositif de mesure de micro-ondes selon la revendication 3,
**caractérisé par le fait que** la structure labyrinthique comprend au moins une zone de résonance se ramifiant (40, 41, 42, ...).

5. Dispositif de mesure de micro-ondes selon l' une quelconque des revendications précédentes,
**caractérisé par le fait que** le résonateur à cavité (19) est essentiellement exempt de matériau diélectrique.

6. Dispositif de mesure de micro-ondes selon l'une quelconque des revendications précédentes,
**caractérisé par le fait que** le dispositif de mesure de micro-ondes est agencé de manière à prendre des mesures sur un produit en forme de cordon, de barre ou de pastille.

7. Arrangement de mesure doté d'un dispositif de mesure de micro-ondes (10) selon l'une quelconque des revendications précédentes, d'une unité de commande (22, 23) reliée au dispositif de mesure de micro-ondes (10) destinée à produire le champ de micro-ondes utilisé pour la prise de mesure et d'une unité de traitement (24, 28) reliée au dispositif de mesure de micro-ondes (10) destinée à déterminer la valeur de mesure en traitant un signal produit par le dispositif de mesure de micro-ondes (10).

8. Arrangement de mesure selon la revendication 7,
**caractérisé par le fait que** la fréquence du champ de micro-ondes utilisé pour la mesure est de 2.0 GHz ou inférieure, préférentiellement de 1.5 GHz ou inférieure, plus préférentiellement de 1.0 GHz ou inférieure.

9. Arrangement de mesure selon la revendication 7 ou 8,
**caractérisé par le fait que** l'unité de traitement (24, 28) est agencée de manière à déterminer deux paramètres indépendants caractérisant une courbe de résonance du signal de mesure.

10. Arrangement de mesure selon l'une des revendications 7 à 9,
**caractérisé par le fait que** l'unité de traitement (24, 28) est agencée de manière à déterminer la fréquence et l'amplitude de la courbe de résonance.

11. Arrangement de mesure selon l'une des revendications 7 à 10,
**caractérisé par le fait que** l'unité de traitement (24, 28) est agencée de manière à déterminer la moiteur, la densité, la masse et/ou une caractéristique diélectrique du produit (17).

12. Arrangement de mesure selon l'une des revendications 7 à 11,
**caractérisé par le fait que** l'unité de traitement (24, 28) est agencée de manière à détecter une substance étrangère dans le produit (17).

13. Utilisation d'un dispositif de mesure de micro-ondes selon l'une des revendications 1 à 6, pour déterminer au moins une valeur de mesure d'un produit fibreux, en particulier un produit en fibres textiles ou en fibres de tabac.
